# EUROPÄISCHE PATENTSCHRIFT

(11) **EP 0 603 378 B1**
(45) Veröffentlichungstag und Bekanntmachung des Hinweises auf die Patenterteilung: **02.10.1996**
(21) Anmeldenummer: 93915849.9
(22) Anmeldetag: 08.07.1993
(51) Int. Cl.: B60R 9/058

(54) **DACHTRÄGER FÜR FAHRZEUGE**
ROOF RACK FOR VEHICLES
GALERIE DE VEHICULE

(30) Priorität: 09.07.1992 DE 4222494
(43) Veröffentlichungstag der Anmeldung: 29.06.1994
(73) Patentinhaber: VOTEX GmbH, D-63303 Dreieich (DE)
(72) Erfinder: LINNHOFF, Jürgen, D-85003 Ingolstadt (DE)
(74) Vertreter: Sasse, Volker, Dipl.-Ing.
(86) Internationale Anmeldenummer: EP9301785
(87) Internationale Veröffentlichungsnummer: WO9401303

(56) Entgegenhaltungen:
- WO-A-92/02386
- DE-A- 3 405 357
- DE-A- 3 607 856
- DE-A- 3 614 747
- US-A- 4 815 643

## Beschreibung

Die Erfindung betrifft einen Dachträger der im Oberbegriff des Patentanspruchs 1 angegebenen Art. Ein solcher Dachträger ist, zum Beispiel, aus dem Dokument DE-A-3 607 856 schon bekannt.

Bei bekannten Dachträgern sind die Trägerfußteile mit dem Trägerholm starr verbunden. Beim Aufsetzen des Dachträgers auf das Dach des Fahrzeuges läßt es sich zumeist nicht vermeiden, daß die Längsrichtung des Trägerholms nicht exakt senkrecht zur Fahrzeug-Längsrichtung liegt. Gerade bei den bei modernen Personenkraftwagen aerodynamisch ausgefeilten Dachkonfigurationen mit konvex gekrümmten Dachrändern gibt es keine eindeutig feststellbare Referenzlinie zum korrekten Aufsetzen des Dachträgers. Da die Trägerfußteile zumeist entweder an der Regenrinne oder an Befestigungswiderlagern des Fahrzeugs in in Fahrzeuglängsrichtung relativ langen Bereichen festgespannt werden, ergeben sich bei ungenauer Ausrichtung des Dachträgers auf dem Dach und/oder infolge der etwas schrägliegenden Abstützungsbereiche am Dach starke Verspannungen im Verbindungsbereich zwischen dem Trägerholm und den Trägerfußteilen. Dies kann bei längerer Benutzung zu ungewünschten Verformungen führen. Ferner ist der Sitz des Dachträgers auf dem Dach zum Einleiten hoher Lasten bzw. starker Beschleunigungs- oder Verzögerungskräfte unbefriedigend. Es können aus den beim Festspannen der Trägerfußteile entstehenden Verspannungen Geräusche im Betrieb entstehen. Die Verbindungsbereiche zwischen den Trägerfußteilen und dem Trägerholm und die Halteelemente im Trägerfußteil werden unerwünscht stark beansprucht und leiern ggfs. aus.

Der Erfindung liegt die Aufgabe zugrunde, einen Dachträger der eingangs genannten Art zu schaffen, der einfach und kostengünstig herstellbar ist und in montiertem Zustand ohne durch die Montage bedingte parasitäre Verspannungen stabil festgelegt ist. Er soll sich leicht an die Dachform anpassen, ohne daß der Dachträger seine stabile Form verliert. Ferner soll sich der erfindungsgemäße Dachträger durch eine bequeme Handhabung und einen sicheren Schutz der Montageelemente gegen Entwenden des Dachträgers auszeichnen.

Diese Aufgabe wird erfindungsgemäß mit den im kennzeichnenden Teil des Anspruchs 1 angegebenen Merkmalen gelöst.

Bei dieser Ausbildung kann sich allein der Trägerfußteil bei der Montage relativ zum Trägerholm so ausrichten, daß ein ungenaues Aufsetzen des Dachträgers auf das Fahrzeugdach und/oder nicht exakt senkrecht zur Längsrichtung des Trägerholms verlaufende Abstützbereiche am Fahrzeugdach derart kompensiert werden, daß jeder Trägerfußteil einen ordnungsgemäßen und dauerhaft festbleibenden Sitz am Fahrzeugdach findet, und daß Verformungen oder Verspannungen im Dachträger durch die Montage vermieden werden. Der Trägerfußteil sucht sich dank der Beweglichkeit im Gelenk bei der Montage und beim Festspannen in den Abstützbereichen am Dach selbsttätig die richtige Position. Es liegt auf der Hand, daß auch bei einem Dachträger, bei dem nicht nur jeweils zwei Trägerfußteile über einen Trägerholm miteinander verbunden sind, sondern eine rahmenartige Trägerholm-Konstruktion vier oder sechs Trägerfußteile aufweist, für jeden Trägerfußteil ein solches Gelenk vorgesehen wird. Auch bei derartigen Dachträgern ist es vorteilhaft, wenn jeder Trägerfußteil relativ zur Trägerholmkonstruktion beweglich ist, so daß bei der Montage ein sicherer Halt erreicht wird. Hierbei ist besonders hervorzuheben, daß der gesamte Trägerfußteil, der auch das Abstützteil auf dem Dach mitumfaßt, sich zum Trägerholm verstellt. Bei dieser Ausführungsform werden über die Gelenkachse, die den Trägerfußteil in einer zur Gelenkachse senkrechten Ebene schwenken läßt, die statischen Belastungen und auch die Kräfte durch Verzögerungen oder Beschleunigungen des Fahrzeugs sicher übertragen.

Dieser Freiheitsgrad, der dem Trägerfußteil im Gelenk ein Verschwenken zumindest zu jeder Seite des Trägerholms ermöglicht, reicht in der Praxis für nahezu alle vorkommenden Dachträger- und Dachformen aus, unerwünschte Verspannungen, Deformationen oder einen instabilen Sitz des festgespannten Trägerfußteils zu vermeiden, wobei die stabile und feste Ausbildung des Trägerholms nicht eingebüßt wird.

Bei der Ausführungsform gemäß Anspruch 2 ergibt sich ein räumlicher Schwenkbereich für den Trägerfußteil, der bei den bei modernen Fahrzeugen meist stark gewölbten und an den Rändern kurvig verlaufenden Dachformen zweckmäßig ist.

Für die Praxis reicht der Schwenkbereich gemäß Anspruch 3 aus, um nachteilige Verspannungen oder Deformationen bzw. instabile Haltekonditionen des Trägerfußteils auszuschließen.

Bei der Ausführungsform gemäß Anspruch 4 verbindet das Gelenk den Trägerfußteil nicht direkt mit dem Trägerholm, sondern mit dem vom Trägerholm nach unten abstehenden, festen Anschlußteil. Dies ist eine Bauweise, wie sie für moderne und eng an das gewölbte Dach des Fahrzeuges angeschmiegte Dachträger zweckmäßig ist. Vor allem bleibt dabei der Trägerholm mit dem Anschlußteil in einer festen Einheit und nur der angelenkte Trägerfußteil richtet sich nach der Schrägfläche des Daches aus.

Die Sicherheit der ordnungsgemäßen Lastübertragung vom Trägerholm auf den Trägerfußteil ist bei der Ausführungsform gemäß Anspruch 5 gewährleistet. Es ergibt sich eine hohe Stabilität des ordnungsgemäß montierten Dachträgers. Die Belastungen werden so großflächig und weiträumig übertragen. Das Gelenk und die einzelnen Komponenten in der weiteren Verbindung unterliegen nur moderaten lokalen Belastungen, die zudem exakt vorherbestimmt sind.

Bei der Ausführungsform gemäß Anspruch 6 liegt eine Art Dreipunkt-Abstützung zwischen dem Trägerfußteil und dem Trägerholm vor, wobei ein Punkt der Dreipunktabstützung die Gelenkachse ist, während die beiden anderen Eckpunkte der Dreipunktabstützung nur in Schwenkrichtung begrenzt beweglich sind, in allen anderen Richtungen hingegen eine feste Verbindung bewirken.

Das unerwünschte Entwenden des Dachträgers vom Fahrzeug ist trotz der vorgesehenen Schwenkbarkeit des Trägerfußteils bei der Ausführungsform gemäß Anspruch 7 vermieden, weil die geschlossene Abdeckklappe den Zutritt zu den die Demontage erlaubenden Komponenten sperrt. Außerdem ergibt sich ein Schutz gegen Umwelteinflüsse für diese oft nur nach langen Zeitabständen zu betätigenden Komponenten des Dachträgers. Die Abdeckklappe ist an dem Trägerholm montiert, so daß sie keine Schwenkbewegung mit dem Trägerfußteil mitmacht, sondern vielmehr die feste Einheit mit dem Trägerholm bietet. Die Abdeckflappe wird mittels des Schwenkriegels versperrt und läßt sich nur öffnen, wenn der Schwenkriegel in der richtigen Weise entsperrt und bewegt wird.

Eine zusätzliche Sicherung und Halterung der Abdeckklappe im nicht abgesperrten aber geschlossenem Zustand ist bei der Ausführungsform gemäß Anspruch 8 gegeben.

Baulich einfach ist die Ausführungsform gemäß Anspruch 9, weil ein und dasselbe Element zum Absperren und Verrasten der Abdeckklappe benutzt wird.

Besonders vorteilhaft ist ferner die Ausführungsform gemäß Anspruch 10, bei der ein hoher Sicherheitsgrad gegen unerlaubtes Öffnen der Abdeckklappe auf baulich besonders einfache und montagetechnisch günstige Weise erreicht wird.

Anhand der Zeichnung wird eine Ausführungsform des Erfindungsgegenstandes erläutert:

Es zeigt:
- Figur 1: einen Vertikalschnitt durch einen Endbereich eines Dachträgers und
- Figur 2: eine Draufsicht auf den Trägerfußteil des Dachträgers von Figur 1 unter Weglassung einiger Komponenten.

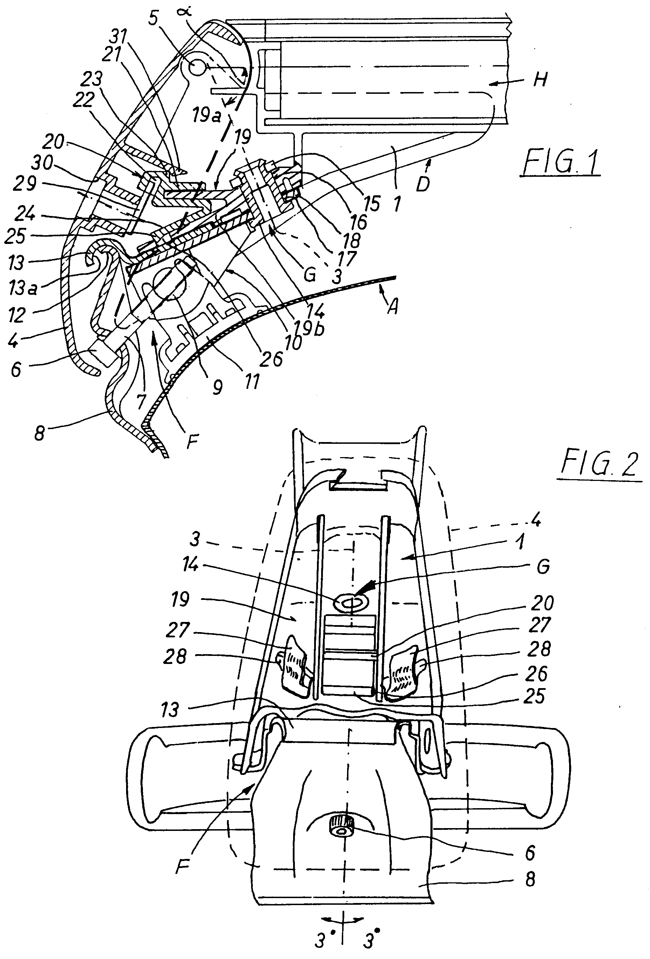

In Figur 1 ist von einem Dachträger D, wie er zum Montieren auf einem Fahrzeugdach A, insbesondere einem Personenkraftwagen-Dach, vorgesehen ist, ein Endbereich eines langgestreckten Trägerholms H mit einem daran befestigten Trägerfußteil F erkennbar. Der Trägerfußteil F ist zur Montage auf einem Dach A bestimmt, bei dem nicht notwendigerweise eine Regenrinne als Abstützbereich benutzt wird, sondern ein konstruktiv in das Dach bzw. den Übergang zu den Seitenflächen der Karosserie integrierter Abstützbereich vorgesehen ist, an dem eine Festspannlasche 8 angreift, die ein gelenkig am Trägerfußteil F angebrachtes Stützkissen 11 gegen die Dachoberfläche preßt. Es ist jedoch durchaus möglich, den Trägerfußteil F auf die früher übliche Weise mit Spannelementen auszustatten, die an der Regenrinne des Fahrzeugdaches A verspannt werden und kein Abstützkissen 11 benötigen.

Vom Endbereich des Trägerholms H ragt ein konsolenartiger Anschlußteil 1 nach unten außen. Der Trägerfußteil F ist mit dem Anschlußteil 1 über ein Gelenk G so verbunden, daß sich der Trägerfußteil F (siehe Figur 2) um eine Gelenkachse 3 nach beiden Seiten relativ zur Längsrichtung des Trägerholms H zur Seite schwenken läßt. Dabei reicht ein Schwenkbereich von jeweils 3° nach jeder Seite in der Praxis aus. Die Gelenkachse 3 befindet sich in einer durch den Trägerholm H und den Trägerfußteil F definierten Vertikalebene in etwa in der Mittelebene des Trägerfußteils F und ist schräg gegenüber der Längsrichtung des Trägerholms H so angestellt, daß sie in etwa senkrecht zur Erstreckungsrichtung des Anschlußteils 1 steht.

Am Anschlußteil 1 ist eine Abdeckklappe 4 angeordnet, die sich um eine hochliegende Querachse 5 verschwenken läßt. Die Abdeckklappe 4 ist - wie später erläutert wird - am Anschlußteil 1 verrastbar und zusätzlich absperrbar. Sie deckt die zur Montage bzw. Demontage zu betätigenden Komponenten des Trägerfußteils F ab.

In einer Mulde der Festspannlasche 8 liegt ein Kopf 6 einer Spannschraube 7, die in ein drehbares Widerlager 9 in einem unterseitigen, mit dem Gelenk G festgelegten Lagerbock 10 eingeschraubt ist. Das Abstützkissen 11 wird am Lagerbock 10 in einer um das Widerlager 9 schwenkbaren Aufhängung gehalten, so daß es sich mit seiner Unterseite an die Dachkontur anzupassen vermag. Die Festspannlasche 8 greift mit ihrem oberen, gebogenen Ende 12 in eine Hohlkehle 13a einer Abstützung 13 ein.

Im Gelenk G ist bei der gezeigten Ausführungsform eine beidendig aufgeweitete Metallhülse 14 vorgesehen, die Bohrungen 16, 17 im Anschlußteil 1 und in einer Grundplatte 18 des Lagerbocks 10 durchsetzt, der zum Trägerfußteil F gehört. Diese Metallhülse 14 kann ebenso ein Bolzen aus Kunststoff oder anderes Material sein, der das Drehzentrum für den Trägerfußteil F festlegt. Eine Unterlegscheibe 15 stellt die Verschwenkbarkeit des Trägerfußteils F mit der Grundplatte 18 um die Gelenkachse 3 sicher, wobei die Grundplatte 18 gegen den Anschlußteil 1 dreht. Auf der Grundplatte 18 ist eine Abstützung 13 festgelegt, auf die noch später eingegangen wird. Der Anschlußteil 1 ist über das Gelenk G hinaus verlängert und bildet dort einen sich V-förmig öffnenden Endabschnitt 19 mit zwei divergierenden Schenkeln 19a und 19b. Am Endabschnitt 19 ist aus fertigungstechnischen Gründen ein einstückiges Element 20 festgelegt, das einen auf den Schenkel 19a aufgesteckten Steckschenkel 21 mit einer hinterschnittenen Riegelfalle 22 und außenseitig eine Gegenrast 23 aufweist. Ein entlang dem anderen Schenkel 19b verlaufender Gegenschenkel 24 des Elements 20 greift zwecks Verrastung mit seinem verdickten Ende 25 in eine Vertiefung 26 im Schenkel 19b ein.

Aus Figur 2 ist erkennbar, daß zusätzlich zum Gelenk G eine weitere Verbindung im Abstand von der Gelenkachse 3 zwischen dem Trägerfußteil F und dem Anschlußteil 1 vorgesehen ist, mit der einerseits der Schwenkbereich des Trägerfußteils F um die Gelenkachse 3 begrenzt und andererseits vom Trägerholm 4 in den Trägerfußteil F übertragene Belastungen aufgenommen werden. Die weitere Verbindung besteht aus zwei Halteklauen 27, die an der Abstützung 13 angesetzt sind und durch Schlitze 28 des Endabschnitts 19 hindurch- und über die Oberseite des Schenkels 19b des Endabschnitts 1 greifen. Die Halteklauen 27 sitzen mit einem Schwenkspiel in den Schlitzen 28. Die Abstützung 13 ist mit der Grundplatte 18 zu einer Einheit zusammengefügt und bildet zusammen mit den angesetzten Halteklauen 27 den wesentlichen Teil für die Verschwenkung des Trägerfußteils F.

In einer Bohrung 30 der Abdeckklappe 4 ist ein z.B. mittels eines Schlüssels betätigbarer Sperrzylinder unterbringbar, der zum Verdrehen eines Schwenkriegels 29 dient, der in Figur 1 in seiner Sperrlage in die Riegelfalle 22 des Elements 20 eingreift. An der Unterseite der Abdeckklappe 4 ist eine federnde Rastnase 31 angeformt, die in der Schließlage der Abdeckklappe 4 gemäß Figur 1 die Gegenrast 23 des Elements 20 hintergreift.

Bei der Montage des Dachträgers D wird dieser auf das Fahrzeugdach A aufgesetzt, wobei die beiden Trägerfußteile F mit ihren Festspannlaschen 8 auf die Befestigungsbereiche am Dach ausgerichtet werden. Durch die Beweglichkeit im Gelenk G richtet sich jeder Trägerfußteil F unabhängig von der Richtung des Trägerholms H so aus, daß die Festspannlasche 8 ordnungsgemäß zum Angriff kommt. Durch Anziehen der Spannschraube 7 wird der Dachträger D festgespannt. Das Abstützkissen 11 legt sich auf die Dachoberfläche auf, so daß letztendlich jeder Trägerfuß F durch seine Festspannlasche 8 und das Abstützkissen 11 ordnungsgemäß festgespannt ist.

## Patentansprüche

1. Dachträger (D) für regenrinnenlose und relinglose Fahrzeuge mit einem quer über das Fahrzeug langgestreckten Trägerholm (H), an dessen beiden Endbereichen je ein auf dem Fahrzeugdach (A) sich abstützender Trägerfußteil (F) befestigt ist, der eine am Dachrand angreifende Festspannlasche (8) aufweist, wobei zwischen jedem Trägerfußteil (F) und dem Trägerholm (H) ein Gelenk (G) vorgesehen ist, dadurch gekennzeichnet, daß die Gelenkachse (3) auf das Fahrzeugdach (A) zeigt und in einem spitzen Winkel (α) zur Längsrichtung des Trägerholms (H) ausgerichtet ist, um den Trägerfußteil im Gelenk zumindest relativ zur Längsrichtung des Trägerholms nach jeder Seite begrenzt in einer zur Gelenkachse (3) senkrechten Ebene zu schwenken.

2. Dachträger nach Anspruch 1, dadurch gekennzeichnet, daß der spitze Winkel (α) zwischen Gelenkachse (3) und Längsrichtung des Trägerholms (H) ca. 50 bis 70° beträgt.

3. Dachträger nach Anspruch 1 oder 2, dadurch gekennzeichnet, daß der Trägerfußteil (F) im Gelenk (G) um ca. 3° nach jeder Seite relativ zur Längsrichtung des Trägerholms (H) schwenkbar ist.

4. Dachträger nach mindestens einem der Ansprüche 1 bis 3, dadurch gekennzeichnet, daß das Gelenk (G) in einem am Ende des Trägerholms (H) angesetzten und schräg nach unten und außen abstehenden Anschlußteil (1) vorgesehen ist und den Trägerfußteil (F) dort gelenkig hält.

5. Dachträger nach mindestens einem der Ansprüche 1 bis 4, dadurch gekennzeichnet, daß im Abstand vom Gelenk (G) wenigstens eine weitere Verbindung (27, 28) zwischen dem Trägerfußteil (F) und dem Anschlußteil (1) vorgesehen ist und daß die weitere Verbindung mit einem Schwenkspiel um die Schwenkachse (3) ausgebildet ist.

6. Dachträger nach mindestens einem der Ansprüche 1 bis 5, dadurch gekennzeichnet, daß das Zentrum des Gelenks (G) von einem Bolzen, einer beidendig aufgeweiteten Metallhülse (14) oder einem vernieteten Zapfen aus Kunststoff oder Metall gebildet ist, daß der Anschlußteil (1) mit einem über das Gelenk (G) hinaus verlängerten Endabschnitt (19) den Fußteil (F) übergreift, daß zwei Halteklauen (27) am Fußteil (F) durch Schlitze (28) des Endabschnittes (19) hindurch und über die Oberseite des Endabschnitts (19) greifen und daß die Halteklauen (27) und die Schlitze (28) in etwa konzentrisch zur Gelenkachse (3) sind.

7. Dachträger nach Anspruch 1, wobei am Endbereich des Trägerholms eine das Gelenk und Montageelemente des Trägerfußteils übergreifende, absperrbare Abdeckklappe angelenkt ist, dadurch gekennzeichnet, daß die Abdeckklappe (4) unabhängig von der Schwenkbewegung des Fußteils (F) ihre Abdecklage einhalt und an der Unterseite der Abdeckklappe (4) einen Sperrriegel (29) aufweist, der in Sperrlage eine am Endabschnitt (19) gehaltene Riegelfalle (22) hintergreift.

8. Dachträger nach Anspruch 8, dadurch gekennzeichnet, daß an der Unterseite der Abdeckklappe (4) eine federnde Rastnase (31) angeordnet ist, die in der Schließlage der Abdeckklappe (4) eine Gegenrast (23) am Endabschnitt (19) übergreift.

9. Dachträger nach Anspruch 7 oder 8, dadurch gekennzeichnet, daß die Riegelfalle (22) und die Gegenrast (23) an einem einstückigen Element (20) angeordnet sind, das in eine vom Endabschnitt (19) gebildete, V-förmige Aufnahme eingesteckt und darin verrastet ist.

10. Dachträger nach mindestens einem der Ansprüche 7 bis 9, dadurch gekennzeichnet, daß das Element (20) einen die Riegelfalle (22) und die Gegenrast (23) tragenden Steckschenkel (21) aufweist, der auf einen von der Schwenkrichtung der Abdeckklappe (4) um die Anlenkung (5) am Endbereich des Trägerholms (H) abweichend ausgerichteten ersten Steg (19a) des Endabschnitts (19) aufgesteckt ist, und daß das Element (20) einen zweiten Schenkel (24) aufweist, der mit seinem Ende (25) in einer Vertiefung (26) eines zweiten Steges (19b) verrastet ist.

## Claims

1. A roof rack (D) for vehicles without gutters and without railings, with a supporting member (H) extending transversely over the vehicle, at the two end zones whereof there is secured one supporting foot component (F) each, supported on the vehicle roof (A), which component has a clamping clip (8) acting on the roof edge, in which arrangement an articulation (G) is provided between each supporting foot component (F) and the supporting member (H), characterized in that the articulation axis (3) points towards the vehicle roof (A) and is orientated at an acute angle α to the longitudinal direction of the supporting member (H) so as to pivot the supporting foot component in the articulation at least relative to the longitudinal direction of the supporting member with a limited scope towards each side, in a plane perpendicular to the articulation axis (3).

2. A roof rack according to claim 1, characterized in that the acute angle α between the articulation axis (3) and the longitudinal direction of the supporting member (H) amounts approximately to 50 to 70°.

3. A roof rack according to claim 1 or 2, characterized in that the supporting foot component (F) is pivotable in the articulation (G) by approximately 3° towards each side relative to the longitudinal direction of the supporting member (H).

4. A roof rack according to at least one of claims 1 to 3, characterized in that the articulation (G) is provided at a connecting component (1) attached at the end of the supporting member (H) and projecting obliquely downwards and outwards, and holds the supporting foot component (F) there in an articulated manner.

5. A roof rack according to at least one of claims 1 to 4, characterized in that at a distance from the articulation (G), there is provided at least one further connection (27, 28) between the supporting foot component (F) and the connecting component (1), and that the further connection is designed with pivoting play round the pivoting axis (3).

6. A roof rack according to at least one of claims 1 to 5, characterized in that the centre of the articulation (G) is formed by a pin, a metal sleeve (14) widened at both ends, or a riveted pin of a plastic material or metal, that the connecting component (1) fits over the foot component (F) with an end section (19) extended beyond the articulation (G), that two holding claws (27) on the foot component (F) reach through slots (28) of the end section (19) and over the top of the end section (19), and that the holding claws (27) and the slots (28) are approximately concentric with the articulation axis (3).

7. A roof rack according to claim 1, wherein a lockable cover flap overlapping the articulation and the mounting elements of the supporting foot component is articulated at the end zone of the supporting member, characterized in that the cover flap (4) maintains its covering position independently of the pivoting movement of the foot component (F) and has at the bottom of the cover flap (4) a locking bolt (29) which engages in the locked position behind a bolt catch (22) mounted on the end section (19).

8. A roof rack according to claim 7, characterized in that at the bottom of the cover flap (4) there is arranged an elastic engagement projection (31) which in the closed position of the cover flap (4) overlaps a cooperating catch (23) on the end section (19).

9. A roof rack according to claim 7 or 8, characterized in that the bolt catch (22) and the cooperating catch (23) are arranged on an integral element (20) which is inserted in a V- shaped receiving means formed by the end section (19), and is engaged therein.

10. A roof rack according to at least one of claims 7 to 9, characterized in that the element (20) has a fitting arm (21) carrying the bolt catch (22) and the cooperating catch (23), which fitting arm is fitted on a first arm (19a) of the end section (19) orientated differently from the pivoting direction of the cover flap (4) round the articulation (5) at the end zone of the supporting member (H), and that the element (20) has a second arm (24) that is engaged with its end (25) in a recessed portion (26) of a second arm (19b)

## Revendications

1. Galerie (D) pour véhicules sans gouttières ni rambardes, comportant une barre (H) allongée en travers du véhicule à chacune des deux zones d'extrémité de laquelle est fixée une partie pied (F) qui s'appuie sur le toit (A) du véhicule et présente une patte de fixation (8) qui s'applique sur le bord du toit, entre chaque partie pied (F) et la barre (H) étant prévue une articulation (G), caractérisée par le fait que l'axe d'articulation (3) est dirigé vers le toit (A) du véhicule et fait un angle aigu (α) avec la direction longitudinale de la barre (H), pour faire pivoter la partie pied dans l'articulation dans un plan perpendiculaire à l'axe d'articulation (3) au moins de façon limitée vers chaque côté relativement à la direction longitudinale de la barre.

2. Galerie selon la revendication 1, caractérisée par le fait que l'angle aigu (α) entre l'axe d'articulation (3) et la direction longitudinale de la barre (H) est d'environ 50 à 70°.

3. Galerie selon l'une des revendications 1 et 2, caractérisée par le fait que la partie pied (F) peut pivoter dans l'articulation (G) d'environ 3° de chaque côté relativement à la direction longitudinale de la barre (H).

4. Galerie selon au moins une des revendications 1 à 3, caractérisée par le fait que l'articulation (G) est prévue dans une partie de raccordement (1) placée à l'extrémité de la barre (H) et saillant obliquement vers le bas et l'extérieur et tient articulée à cet endroit la partie pied (F).

5. Galerie selon au moins une des revendications 1 à 4, caractérisée par le fait qu'à une certaine distance de l'articulation (G) est prévue au moins une autre liaison (27, 28) entre la partie pied (F) et la partie de raccordement (1), et que cette autre liaison a un jeu de pivotement autour de l'axe d'articulation (3).

6. Galerie selon au moins une des revendications 1 à 5, caractérisée par le fait que l'axe matériel de l'articulation (G) est formé par une cheville, une douille métallique élargie aux deux extrémités (14) ou un tourillon rivé en plastique ou en métal, que la partie de raccordement (1) coiffe la partie pied (F) par une partie d'extrémité (19) prolongée au delà de l'articulation (G), que deux griffes de retenue (27) faites sur la partie pied (F) passent par des fentes (28) de la partie d'extrémité (19) et s'appliquent sur la face supérieure de la partie d'extrémité (19), et que ces griffes de retenue (27) et les fentes (28) sont à peu près concentriques par rapport à l'axe d'articulation (3).

7. Galerie selon la revendication 1, sur laquelle un volet de couverture blocable recouvrant l'articulation et des éléments de montage de la partie pied est articulé sur la zone d'extrémité de la barre, caractérisée par le fait que ce volet de couverture (4) conserve sa position de couverture indépendamment du mouvement de pivotement de la partie pied (F) et présente sur le dessous un verrou de blocage (29) qui, en position de blocage, est engagé dans une gâche (22) montée sur la partie d'extrémité (19).

8. Galerie selon la revendication 7, caractérisée par le fait que sur le dessous du volet de couverture (4) est prévu un ergot élastique d'encliquetage (31) qui, lorsque le volet de couverture (4) est fermé, est en prise avec un contre-élément d'encliquetage (23) prévu sur la partie d'extrémité (19).

9. Galerie selon l'une des revendications 7 et 8, caractérisée par le fait que la gâche (22) et le contre-élément d'encliquetage (23) sont prévus sur un élément d'une seule pièce (20) qui est monté dans un logement en V formé par la partie d'extrémité (19) et y est encliqueté.

10. Galerie selon au moins une des revendications 7 à 9, caractérisée par le fait que l'élément (20) présente une branche à emboîture (21) qui porte la gâche (22) et le contre-élément d'encliquetage (23) et est montée sur une première branche (19a) de la partie d'extrémité (19) orientée différemment de la direction de basculement du volet de couverture (4) autour de l'articulation (5) prévue dans la zone d'extrémité de la barre (H), et que l'élément (20) présente une deuxième branche (24) qui est encliquetée à son extrémité (25) dans un creux (26) d'un deuxième branche (19b).
